# EUROPEAN PATENT SPECIFICATION

(11) **EP 2 328 106 B1**
(45) Date of publication and mention of the grant of the patent: **20.05.2020**
(21) Application number: 09799937.9
(22) Date of filing: 20.01.2009
(51) Int. Cl.: G03G 15/08, G03G 21/18

(54) **METHOD,DEVICE AND SYSTEM FOR INFORMATION INPUT OF ASSISTANT DEVICE OF AN IMAGING APPARATUS**
VERFAHREN, VORRICHTUNG UND SYSTEM ZUR INFORMATIONSEINGABE EINER HILFSVORRICHTUNG EINES BILDGEBUNGSGERÄTS
PROCÉDÉ, DISPOSITIF ET SYSTÈME POUR L'ENTRÉE D'INFORMATIONS D'UN DISPOSITIF AUXILIAIRE D'UN APPAREIL D'IMAGERIE

(30) Priority: 23.07.2008 CN 200810134727
(43) Date of publication of application: 01.06.2011
(73) Proprietor: Apex Microelectronics Co., Ltd., Zhuhai Guangdong 519000 (CN)
(72) Inventor: ZHANG, Hao, Guangdong 519000 (CN)
(74) Representative: Gevers & Orès
(86) International application number: PCT/CN2009/070021
(87) International publication number: WO 2010/009621

(56) References cited:
- CN-A- 1 467 578
- CN-A- 1 550 924
- CN-A- 1 991 633
- CN-A- 101 387 816
- GB-A- 2 251 406
- KR-B1- 100 769 738
- US-A1- 2004 228 641
- US-A1- 2006 034 624

## Description

This application claims the benefit of Chinese patent application 200810134727.3, entitled "Information input method, apparatus and system for associated apparatus of imaging device", and filed with the Chinese Patent Office on July 23, 2008.

### Field of the Invention

The present invention relates to the field of imaging, and in particular, to an information input method, apparatus and system for an associated apparatus of an imaging device.

### Background of the Invention

Due to the increasing needs for imaging devices such as printers, copiers and fax machines, the needs for various exchangeable imaging cartridges, e.g. ink cartridges, associated with the imaging devices are also increasing.

Generally, an imaging cartridge includes a chip where a communication protocol for communication with a particular type of imaging device and chip data are stored. The chip data includes, e.g., model of the imaging cartridge, management data for imaging cartridge ink, and characterizing data and control data corresponding to the type of imaging device. A particular type of chip where corresponding communication protocol and chip data are stored are installed in a particular type of imaging cartridge, and the imaging cartridge can only be used in conjunction with a particular type of imaging device. Therefore, as the numbers of types of imaging cartridges and imaging devices increase, imaging cartridge manufactures have to prepare different types of chips to produce imaging cartridges that can be used on different types of imaging devices.

In order to overcome this incompatibility drawback, universal chips have been invented. For example, US patent 7088928 discloses a universal chip. A system of the universal chip determines through the chip whether an imaging device is a first type imaging device or a second type imaging device. If the imaging device is a first type imaging device, the chip is operated in a first operation mode; and if the imaging device is a second type imaging device, the chip is operated in a second operation mode. In the universal chip system, the chip used together with the imaging cartridge in the imaging device includes: a storage element for storing imaging cartridge data, and a controller for controlling operation of the chip and determining whether the imaging device is a first type imaging device or a second type imaging device. If the imaging device is a first type imaging device, the controller is adapted to operate the chip in a first mode, and if the imaging device is a second type imaging device, the controller is adapted to operate the chip in a second mode. The storage element of the universal chip requires a lot of space to store data for each type of imaging device, and the controller of the universal chip needs complex and long programs to distinguish each type of imaging device, therefore required resource space is large and manufacture costs of the universal chip are expensive.
US 2006/0034624 A1 discloses a cartridge chip for use an imaging cartridge installed in an imaging device, the cartridge chip comprising a memory element storing imaging cartridge data, and a controller for controlling the operation of the cartridge chip.
US 2004/0228641 A1 discloses that in a printing apparatus, verification of the correctness of a particular replaceable module takes place before an operating element of the print apparatus fully engages the replaceable module.

### Summary of the Invention

Embodiments of the invention provide an information input method according to claim 12, a chip according to claim 1 and an information input apparatus according to claim 2, which can improve compatibility of a chip and lower manufacture cost of the chip. Preferred embodiments are covered by the dependent claims.

As can be seen from the embodiments of the invention, a modification is made based on existing chips, and an associated information input apparatus is provided, so that chip data can be input by two steps: universal information is already stored in a chip when producing of the chip finishes, and when the chip is provided to a user, the user can input alternative information to the chip through an associated information input apparatus. Therefore, a particular type of chip now can be installed on multiple types of imaging devices, and chip compatibility is greatly improved.

### Brief Description of the Drawings

Figure 1 is a structural diagram of an associated system of an imaging cartridge according to an embodiment of the invention.
Figure 2 is a structural diagram of a chip according to an embodiment of the invention.
Figure 3 is a structural diagram of an information input apparatus according to an embodiment of the invention.
Figure 4 is a flow chart of a chip information input method according to an embodiment of the invention.

### Detailed Description of the Invention

The objects, characteristics and advantages of the invention will be easily understood by reference to the following description of embodiments when read in conjunction with the accompanying drawings.

Please note that combinations of universal information and alternative information in the embodiments of the invention can include the following four combinations, and the alternative information can be the alternative information in the following combinations:
Combination 1:
   The universal information includes: a common part of communication protocols between the chip and different types of imaging devices;
   The alternative information includes: a difference part of the communication protocols between the chip and different types of imaging devices, and chip data for the chip to be applied to different types of imaging devices.
Combination 2:
   The universal information includes: a common part of communication protocols between the chip and different types of imaging devices, and a common part of chip data for the chip to be applied to different types of imaging devices;
   The alternative information includes: a difference part of the communication protocols between the chip and different types of imaging devices, and a difference part of chip data for the chip to be applied to different types of imaging devices.
Combination 3:
   The universal information includes: a universal communication protocol between the chip and different types of imaging devices;
   The alternative information includes: chip data for the chip to be applied to different types of imaging devices.
Combination 4:
   The universal information includes: a universal communication protocol between the chip and different types of imaging devices, and a common part of chip data for the chip to be applied to different types of imaging devices;
   The alternative information includes: a difference part of chip data for the chip to be applied to different types of imaging devices.

The above communication protocol refers to an agreement between the chip and the imaging device. The agreement is a regulation of, e.g., data format, synchronization method, transmission speed, transmission procedure, error detection and correction method, and control character definition, and is followed by both parties. During manufacture, a basic part of the communication protocol is inputted to the chip, including data format, synchronization method, transmission speed, transmission procedure, error detection and correction method, and control character definition.

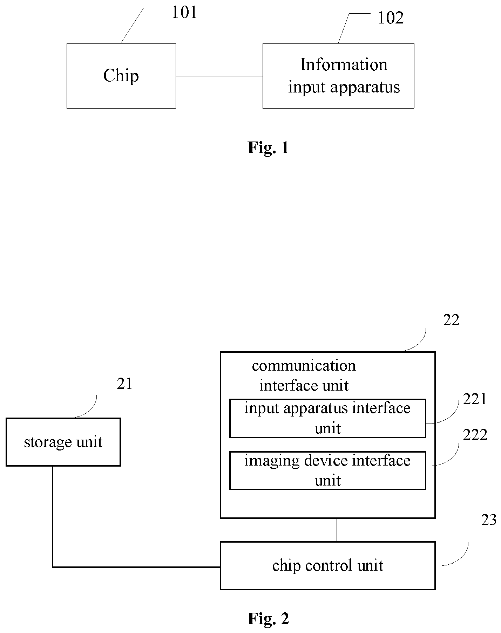

Figure 1 illustrates the structure of an associated system of an imaging cartridge according to an embodiment of the invention:
The associated system of an imaging cartridge includes: a chip 101 and an information input apparatus 102. And:
the chip 101 is adapted to store universal information, and alternative information sent by the information input apparatus;
the information input apparatus 102 is adapted to store and input to the chip the alternative information.

Communication between the chip 101 and the information input apparatus 102 can be done in two ways: wired or wireless.

The wired way refers to that, the associate system of an imaging cartridge includes a connection apparatus adapted to provide a transmission channel for communication between the information input apparatus 102 and the chip 101. The information input apparatus 102 performs communication after connecting with a contact on the chip 101 via the connection apparatus. The contact may be a contact used for communication between the chip 101 and the imaging device. Please note that, for chips having different types of contact structures, their corresponding connection apparatuses are different. The connection apparatuses can be equipped with resistors having different resistances, so that when a connection apparatus is connected to the input apparatus and the input apparatus is powered on, the input apparatus can determine the type of the connection apparatus in use and determines accordingly the contact structure of the chip in use. Chips having the same type of contact structure may be chips supporting the same communication protocol or chips supporting different communication protocols. Therefore, according to the determined contact structure type, the input apparatus can know the one or more communication protocols that the chip might support. The input apparatus then communicates with the chip via the one or more communication protocols. If the chip responses correctly, the communication protocol in use is the communication protocol supported by the chip.

The wireless way refers to that, if the chip 101 is a wireless chip, there may be no connection apparatus. Information is transmitted directly by a chip interface unit for the chip and the information input apparatus 102, such as a coil, an infrared interface and any module that may implement wireless communication.

During the above wired or wireless communication, the information input apparatus 102 and the chip 101 can communicate according to a communication protocol between the information input apparatus 102 and the chip 101, or communication according to a communication protocol between the chip 101 and the imaging device.

Furthermore, the information input apparatus 102 can update the chip 101 according to a communication protocol with the chip 101, e.g., upgrade or reset the chip 101. If a function of the imaging device is upgraded, the chip 101 associated with the imaging device may be no longer suitable for working in conjunction with the upgraded imaging device, therefore the chip 101 needs to be upgraded. Upgrading can be done via a communication protocol in the information input apparatus 102, which can be the same as an aforementioned communication protocol, or can be a dedicated communication protocol for upgrading. Thus, the flexibility of chip alternation is further improved.

Furthermore, the information input apparatus 102 is adapted to detect whether the chip 101 is functional. The information input apparatus 102 can detect whether the chip 101 is functional according to a communication protocol between the chip 101 and the imaging device.

Furthermore, the information input apparatus 102 is adapted to prompt an alert if a detection result is that the chip 101 is not functional.

In an embodiment of the invention, complete communication protocols are inputted during manufacture of the chip. Accordingly, chip data can be stored in the information input apparatus 102.

Alternatively, a common part of the chip data is inputted during manufacture of the chip, in addition to the complete communication protocols. A difference part of the chip data is stored in the information input apparatus 102.

Alternatively, a common part of the communication protocols is inputted during manufacture of the chip. Accordingly, a difference part of the communication protocols and the chip data are stored in the information input apparatus 102.

Alternatively, a common part of the communication protocols and a common part of the chip data are inputted during manufacture of the chip. A difference part of the communication protocols and a difference part of the chip data can be stored in the information input apparatus 102.

Particularly, when communication protocols are inputted to the chip 101, chip data are also inputted to the chip 101. The chip data includes chip information data, and characterize data and control data corresponding to the type of the imaging device. Generally, the chip 101 is not inputted with data during manufacture. All data are inputted to the chip 101 by a user using the information input apparatus 102 via the connection apparatus according to the imaging device to be used.

For example, a company A produces three types of printers, printer A, printer B and printer C. Communication protocols between the three types of printers and corresponding chips are the same, but, characterize data (also know as identification code) corresponding to printer A is A123, characterize data corresponding to printer B is B123, and characterize data corresponding to printer C is C123. In addition, chip information data corresponding to the three types of printers are different. Therefore, during manufacture, complete communication protocols are inputted to a chip, and a user can input corresponding chip data to the chip using the information input apparatus according to each type of printer. Thus, a printer used by a user can be used in conjunction with an imaging cartridge installed with the chip to produce images.

In addition, some communication protocols between the imaging device and the chip are just slightly different. Therefore, the chip can be produced in a way that a common part of the communication protocols are inputted, and a different part of the combination protocols and chip data are stored in the associated information input apparatus.

For example, a company B produces printers of type X and type Y. The communication protocol between type X printer and the chip is communication protocol D, the communication protocol between type Y printer and the chip is communication protocol E. Communication protocols D and E are similar, and synchronization method, transmission speed, transmission procedure, error detection and correction method, and control character definition of which are the same. These parts are referred to as communication protocol F, and the different parts in communication protocol D and communication protocol E are referred to as communication protocol G and communication protocol H. During manufacture, the same communication protocol F is inputted in a chip; if the imaging device used by a user is a type X printer, the user inputs communication protocol G and corresponding chip data to the chip using the information input apparatus through a connection apparatus; if the imaging device used by a user is a type Y printer, the user inputs communication protocol H and corresponding chip data to the chip using the information input apparatus through a connection apparatus. Therefore, a chip with limited resource space can be used by a customer in different types of imaging devices. Costs and stock size of the customer are reduced.

However, some times a part of common data, such as a common part of chip information data for the chip to be applied to different types of imaging devices, is inputted during manufacture, then corresponding data is inputted by a user according to the type of a imaging device to be used. For example, if a chip uses a PIC single-chip processor for control and storage, because the space of the EEPROM of low-end PIC single-chip microprocessor is limited, a common part of a part of chip information data for the chip to be applied to different types of imaging devices has to be stored in the FLASH. Because the FLASH of PIC single-chip processors are written page by page and inconvenient to be rewritten, data of the common part has to be inputted to the chip together with the communication protocols during manufacture. Therefore, data of the difference part in addition to the data that has been written during the manufacture are stored in the information input apparatus for the user to use according to the needs. Thus, in both of the two situations where complete communication protocols are inputted and a common part of the communication protocols are inputted to the information input apparatus, a common part of chip data can be inputted to the chip, and a difference part of the chip data can be inputted to the information input apparatus, then the information input apparatus can input the difference part of the chip data to the chip according to the needs.

As can be seen from the embodiments of the invention, a user can input alternative information that is needed by the user to the chip by using an associated information input apparatus through a connection apparatus, so that the user can obtain the final chip installed on the imaging cartridge. Therefore, a particular type of chip can be installed on multiple types of imaging devices, chip compatibility is greatly improved, size of storage of the user is reduced, and costs are also reduced.

Figure 2 illustrates a structural diagram of a chip according to an embodiment of the invention.

The chip includes a storage unit 21, a communication interface unit 22 and a chip control unit 23.

The storage unit 21 is adapted to store universal information and alternative information; the communication interface unit is adapted to provide a communication interface for communication between an external device and the chip; the chip control unit is adapted to control communication between the chip and the external device.

In the embodiment, the communication interface unit 22 includes: a input apparatus interface unit 221 and an imaging device interface unit 222;
the input apparatus interface unit 221 is adapted to provide a communication interface for communication between the chip and the information input apparatus;
the imaging device interface unit 222 is adapted to provide a communication interface for communication between the chip and the imaging device.

The input apparatus interface unit 221 and the imaging device interface unit 222 can be the same interface unit, for example, a contact for communication between the chip and the imaging device can be used as the input apparatus interface unit 221.

The imaging device interface unit 222 is further adapted to provide a communication interface for the information input apparatus to detect whether the chip is functional.

When the chip is a wireless chip, the communication between the chip and the external device is performed using a chip interface unit for the chip and the information input apparatus, such as a coil, an infrared interface and any module that may implement wireless communication.

Chip data can be input by two steps: universal information is already stored in a chip when the chip is produced, and when the chip is provided to a user, the user can input alternative information needed by the user to the chip using an associated information input apparatus, and the scopes of the universal information and the alternative information are defined efficiently so that the difficulty of the user's secondary operation is reduced. Therefore, a particular type of chip can be installed on multiple types of imaging devices, and chip compatibility is greatly improved.

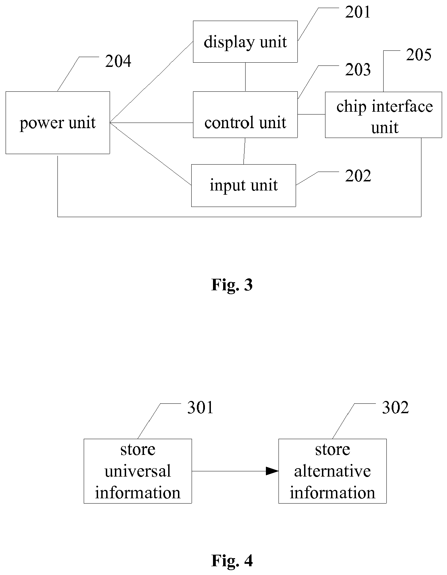

Figure 3 illustrates an embodiment of the information input apparatus of the invention, including:
a display unit 201, an input unit 202, a control unit 203, a power unit 204, and a chip interface unit 205;
the display unit 201 is adapted to display a working status of the information input apparatus and an information prompt;
the input unit 202 is adapted to input to the control unit an instruction providing alternative information;
the control unit 203 is adapted to receive the instruction inputted by the input unit, extract the alternative information, and send the alternative information to the chip through the chip interface unit;
the power unit 204 is adapted to provide power for the information input apparatus;
the chip interface unit 205 is adapted to provide a communication interface for communication between the information input apparatus and the chip.

Furthermore, the information input apparatus can include an external storage unit (not shown in the figure) adapted to store the alternative information.

Normally, the control unit 203 is a single-chip processor which includes a storage, therefore data to be stored can be stored in the storage. Furthermore, the information input apparatus can include an external storage unit adapted to store the alternative information. The control unit 203 is further adapted to provide the alternative information corresponding to the instruction from the external storage unit. That is, data that needed by the information input apparatus can be stored entirely in the storage of the control unit 203, or can be stored partially in the external storage unit.

Furthermore, the information input apparatus can include an output apparatus interface unit (not shown in the figure) adapted to provide a communication interface for communication between an output apparatus, which inputs data to the information input apparatus, and the information input apparatus.

Apparently, similar to the chip, if a wireless way is used, communication between the information input apparatus and an external device is performed using a chip interface unit for the chip and the information input apparatus, such as a coil, an infrared interface and any module that may implement wireless communication.

The control unit 203 in the information input apparatus is further adapted to control the information input apparatus to detect whether the chip is functional. Here, the display unit can be adapted to display a detection result.

For example, the information input apparatus simulates an imaging device detecting a chip to detect the chip via a contact of the chip. For example, the information input apparatus exchange information with the chip though a contact of the chip according to a communication protocol between a corresponding type of imaging device and the chip, and if a component of a peripheral circuit of the chip is broken or the communication protocol stored in the chip is not right, the information input apparatus can not exchange information with the chip properly, which leads to a display of communication fault. Furthermore, if there is an error in the data of the chip, the information input apparatus will find the error by exchanging information with the chip and comparing with corresponding data stored by itself, then the information input apparatus can display it through the display unit 201. Therefore, the information input apparatus can detect the condition of the chip, and the user can use it trouble-free.

Furthermore, corresponding to the detection function of the information input apparatus, the information input apparatus can include an alert unit (not shown in the figure) adapted to prompt an alert if the information input apparatus detects that the chip is not functional. Therefore, the effect of error indication can be improved.

The display unit 201 can include a Liquid-crystal display and the like, so that the user can be notified timely with a working status of the information input apparatus, and a user-friendly interface can be displayed. The input unit 202 can include a device with information input function such as a keyboard input device and a touch-sensing input device. The control unit 203 can include a device with control function such as a PIC single-chip processer. The chip interface unit 205 can include a device which implements information interaction such as contact structure, so that information can be interacted.

As can be seen from the embodiment, an associated information input apparatus is provided to be used in conjunction with the chip. Therefore, chip data can be input by two steps: universal information is already stored in a chip when the chip is produced, and when the chip is provided to a user, the user can input customized information needed by the user to the chip using the information input apparatus. Thus, it is possible for a particular type of chip to be installed on multiple types of imaging devices, and chip compatibility is greatly improved.

Figure 4 illustrates an information input method for a chip according to an embodiment of the invention, including:
step 301: storing universal information into the chip;
step 302: storing alternative information into the chip after storing the universal information.

As can be seen from the embodiment, chip data can be input by two steps: first, universal information is already stored in a chip when producing of the chip finishes, and second, when the chip is provided to a user, the user can input alternative information that is needed by the user to the chip by using an associated information input apparatus, and the scopes of the universal information and the alternative information can be defined efficiently so that the difficulty of the user's secondary operation is reduced. Therefore, a particular type of chip can be installed on multiple types of imaging devices, and chip compatibility is greatly improved.

Those skilled in the art should understand that all or a part of the steps of the method of the above embodiment can be implemented by a program instructing related hardware. The program can be stored in a computer readable storage medium. While being executed, the program includes the following steps:
storing universal information into the chip;
storing alternative information into the chip after storing the universal information.

An information input method, an information input apparatus and an information input system for an associated apparatus of an imaging device provided by the embodiments of the invention are described above. The principle and embodiments of the invention are illustrated by example, which is solely for a better understanding of the method and the core idea of the invention. Furthermore, alternations can be made to the embodiments and applications of the invention by those skilled in the art according to the scope of the invention, as defined by the appended claims.

## Claims

1. A chip (101) comprising:
- a storage unit (21) adapted to store universal information and alternative information, wherein the universal information is written during manufacture process and the alternative information is written when the chip is provided to a specific user after the manufacture process;
- a communication interface unit (22) adapted to provide a communication interface for communication between an external device and the chip (101);
- a chip control unit (23) adapted to control communication between the chip (101) and the external device;
**characterized in that** said alternative information is sent by an information input apparatus (102) according to a type of an imaging device (201) to be used with the chip (101), wherein:
the communication interface unit (22) comprises:
an input apparatus interface unit (221), adapted to provide a communication interface for communication between the chip (101) and the information input apparatus (102); and
an imaging device interface unit (222), adapted to provide a communication interface for communication between the chip (101) and the imaging device, and further adapted to provide a communication interface for the information input apparatus (102) to detect whether the chip (101) is functional;
the input apparatus interface unit (221) and the imaging device interface unit (222) are the same interface unit; and
- the universal information comprises: a common part of communication protocols between the chip and different types of imaging devices; the alternative information comprises: a difference part of the communication protocols between the chip and different types of imaging devices, and chip data for the chip to be applied to different types of imaging devices; or
- the universal information comprises: a common part of communication protocols between the chip and different types of imaging devices, and a common part of chip data for the chip to be applied to different types of imaging devices; the alternative information comprises: a difference part of the communication protocols between the chip and different types of imaging devices, and a difference part of chip data for the chip to be applied to different types of imaging devices; or
- the universal information comprises: a universal communication protocol between the chip and different types of imaging devices; the alternative information comprises: chip data for the chip to be applied to different types of imaging devices; or the universal information comprises: a universal communication protocol between the chip and different types of imaging devices, and a common part of chip data for the chip to be applied to different types of imaging devices; the alternative information comprises: a difference part of chip data for the chip to be applied to different types of imaging devices.

2. An information input apparatus (102) comprising a display unit (201), an input unit (202), a control unit (203), a power unit (204), and a chip interface unit (205);
wherein :
- the display unit (201) is adapted to display a working status of the information input apparatus (102) and an information prompt;
- the input unit (202) is adapted to input to the control unit (203) an instruction providing an alternative information according to a type of an imaging device to be used with a chip (101) according to claim 1, the alternative information is written when the chip is provided to a specific user after the manufacture process, wherein the alternative information comprises:
- a difference part of the communication protocols between the chip and different types of imaging devices, and chip data for the chip to be applied to different types of imaging devices; or
- a difference part of the communication protocols between the chip and different types of imaging devices, and a difference part of chip data for the chip to be applied to different types of imaging devices; or
- chip data for the chip to be applied to different types of imaging devices; or
- a difference part of chip data for the chip to be applied to different types of imaging devices;
- the control unit (203) is adapted to receive the instruction inputted by the input unit, extract the alternative information, and send the alternative information to said chip (101) according to any of the preceding claims through the chip interface unit (205);
- the power unit (204) is adapted to provide power for the information input apparatus;
- the chip interface unit (205) is adapted to provide a communication interface for communication between the information input apparatus (102) and the chip (101).

3. The information input apparatus according to claim 2, **characterized in that** it is further adapted to determine a communication protocol supported by the chip (101) through:
- determining a contact structure type of the chip according to resistance of a resistor equipped in a connection apparatus, the connection apparatus being for providing a transmission channel for communication between the information input apparatus (102) and the chip (101),
- determining one or more communication protocols supported by chips having the determined contact structure type, and
- communicating with the chip (101) via the one ore more communication protocols, wherein, if the chip responds correctly, a communication protocol in use is the communication protocol supported by the chip.

4. The information input apparatus according to claim 2, **characterized in that** it further comprises an external storage unit adapted to store said alternative information.

5. The information input apparatus according to claim 2, **characterized in that** it further comprises an output apparatus interface unit, adapted to provide a communication interface for communication between an output apparatus which outputs data to the information input apparatus and the information input apparatus.

6. The information input apparatus according to claim 2, **characterized in that** the control unit (203) is further adapted to control the information input apparatus (102) to detect whether the chip (101) is functional.

7. The information input apparatus according to claim 2, **characterized in that** it further comprises an alert unit adapted to prompt an alert indication if the information input apparatus (102) detects that the chip (101) is not functional.

8. An associated system of an imaging cartridge, comprising a chip (101) and an information input apparatus (102), said system being **characterized in that**;
- the chip is a chip (101) according to claim 1, adapted to store universal information and alternative information sent by the information input apparatus (102), wherein the universal information is written during manufacture process and the alternative information is written when the chip is provided to a specific user after the manufacture process; and
- the information input apparatus is an information input apparatus (102) according to any of claims 2 to 7, adapted to store and send to the chip (101) the alternative information

9. The associated system of an imaging cartridge according to claim 8, further comprising a connection apparatus, adapted to provide a transmission channel for communication between the information input apparatus (102) and the chip (101).

10. The associated system of an imaging cartridge according to claim 8, wherein, the information input apparatus (102) and the chip (101) communicate in a wireless way.

11. The associated system of an imaging cartridge according to any one of claims 8 to 9, wherein, the information input apparatus (102) is further adapted to upgrade the chip (101) according to a communication protocol between the information input apparatus and the chip.

12. An information input method for a chip (101) according to claim 1, said method comprising the following steps :
- storing universal information (301) into the chip (101), wherein the universal information is written during manufacture process;
- storing alternative information (302) into the chip (101) after storing the universal information, by using a chip interface unit (205) between the chip and an information input apparatus (102), the alternative information is written when the chip is provided to a specific user after the manufacture process, wherein
the universal information comprises: a common part of communication protocols between the chip and different types of imaging devices; the alternative information comprises: a difference part of the communication protocols between the chip and different types of imaging devices, and chip data for the chip to be applied to different types of imaging devices; or
the universal information comprises: a common part of communication protocols between the chip and different types of imaging devices, and a common part of chip data for the chip to be applied to different types of imaging devices; the alternative information comprises: a difference part of the communication protocols between the chip and different types of imaging devices, and a difference part of chip data for the chip to be applied to different types of imaging devices; or
the universal information comprises: a universal communication protocol between the chip and different types of imaging devices; the alternative information comprises: chip data for the chip to be applied to different types of imaging devices; or
the universal information comprises: a universal communication protocol between the chip and different types of imaging devices, and a common part of chip data for the chip to be applied to different types of imaging devices; the alternative information comprises: a difference part of chip data for the chip to be applied to different types of imaging devices.

## Patentansprüche

1. Chip (101), umfassend:
- eine Speichereinheit (21), geeignet, um universelle Informationen und alternative Informationen zu speichern, wobei die universellen Informationen während des Herstellungsprozesses geschrieben werden und die alternativen Informationen nach dem Herstellungsprozess geschrieben werden, wenn der Chip einem spezifischen Benutzer bereitgestellt wird;
- eine Kommunikationsschnittstelleneinheit (22), geeignet, um eine Kommunikationsschnittstelle zur Kommunikation zwischen einer externen Vorrichtung und dem Chip (101) bereitzustellen;
- eine Chipsteuereinheit (23), geeignet, um Kommunikation zwischen dem Chip (101) und der externen Vorrichtung zu steuern;
**dadurch gekennzeichnet, dass** die alternativen Informationen von einer Informationseingabeeinrichtung (102) gemäß einem Typ einer Bildgebungsvorrichtung (201) gesendet werden, die mit dem Chip (101) verwendet werden soll, wobei:
die Kommunikationsschnittstelleneinheit (22) umfasst:
eine Eingabeeinrichtungs-Schnittstelleneinheit (221), geeignet, um eine Kommunikationsschnittstelle zur Kommunikation zwischen dem Chip (101) und der Informationseingabeeinrichtung (102) bereitzustellen; und
eine Bildgebungsvorrichtung-Schnittstelleneinheit (222), geeignet, um eine Kommunikationsschnittstelle zur Kommunikation zwischen dem Chip (101) und der Bildgebungsvorrichtung bereitzustellen, und weiter geeignet, um eine Kommunikationsschnittstelle für die Informationseingabeeinrichtung (102) bereitzustellen, um zu erkennen, ob der Chip (101) funktionsfähig ist;
wobei die Eingabeeinrichtungs-Schnittstelleneinheit (221) und die Bildgebungsvorrichtung-Schnittstelleneinheit (222) die gleiche Schnittstelleneinheit sind; und
- die universellen Informationen umfassen: einen gemeinsamen Teil von Kommunikationsprotokollen zwischen dem Chip und unterschiedlichen Typen von Bildgebungsvorrichtungen; die alternativen Informationen umfassen: einen Unterschiedsteil der Kommunikationsprotokolle zwischen dem Chip und unterschiedlichen Typen von Bildgebungsvorrichtungen, und Chipdaten für den Chip, der auf unterschiedliche Typen von Bildgebungsvorrichtungen angewendet werden soll; oder
- die universellen Informationen umfassen: einen gemeinsamen Teil von Kommunikationsprotokollen zwischen dem Chip und unterschiedlichen Typen von Bildgebungsvorrichtungen, und einen gemeinsamen Teil von Chipdaten für den Chip, der auf unterschiedliche Typen von Bildgebungsvorrichtungen angewendet werden soll; die alternativen Informationen umfassen: einen Unterschiedsteil der Kommunikationsprotokolle zwischen dem Chip und unterschiedlichen Typen von Bildgebungsvorrichtungen, und einen Unterschiedsteil von Chipdaten für den Chip, der auf unterschiedliche Typen von Bildgebungsvorrichtungen angewendet werden soll; oder
- die universellen Informationen umfassen: ein universelles Kommunikationsprotokoll zwischen dem Chip und unterschiedlichen Typen von Bildgebungsvorrichtungen; die alternativen Informationen umfassen: Chipdaten für den Chip, der auf unterschiedliche Typen von Bildgebungsvorrichtungen angewendet werden soll; oder
die universellen Informationen umfassen: ein universelles Kommunikationsprotokoll zwischen dem Chip und unterschiedlichen Typen von Bildgebungsvorrichtungen, und einen gemeinsamen Teil von Chipdaten für den Chip, der auf unterschiedliche Typen von Bildgebungsvorrichtungen angewendet werden soll; die alternativen Informationen umfassen: einen Unterschiedsteil von Chipdaten für den Chip, der auf unterschiedliche Typen von Bildgebungsvorrichtungen angewendet werden soll.

2. Informationseingabeeinrichtung (102), umfassend eine Anzeigeeinheit (201), eine Eingabeeinheit (202), eine Steuereinheit (203), eine Stromversorgungseinheit (204) und eine Chipschnittstelleneinheit (205);
wobei:
- die Anzeigeeinheit (201) geeignet ist, um einen Betriebszustand der Informationseingabeeinrichtung (102) und eine Informationseingabeaufforderung anzuzeigen;
- die Eingabeeinheit (202) geeignet ist, eine Anweisung in die Steuereinheit (203) einzugeben, die alternative Informationen gemäß einem Typ einer Bildgebungsvorrichtung bereitstellt, die mit einem Chip (101) nach Anspruch 1 verwendet werden soll, wobei die alternativen Informationen nach dem Herstellungsprozess geschrieben werden, wenn der Chip einem spezifischen Benutzer bereitgestellt wird, wobei die alternativen Informationen umfassen:
- einen Unterschiedsteil der Kommunikationsprotokolle zwischen dem Chip und unterschiedlichen Typen von Bildgebungsvorrichtungen, und Chipdaten für den Chip, der auf unterschiedliche Typen von Bildgebungsvorrichtungen angewendet werden soll; oder
- einen Unterschiedsteil der Kommunikationsprotokolle zwischen dem Chip und unterschiedlichen Typen von Bildgebungsvorrichtungen, und einen Unterschiedsteil von Chipdaten für den Chip, der auf unterschiedliche Typen von Bildgebungsvorrichtungen angewendet werden soll; oder
- Chipdaten für den Chip, der auf unterschiedliche Typen von Bildgebungsvorrichtungen angewendet werden soll; oder
- einen Unterschiedsteil von Chipdaten für den Chip, der auf unterschiedliche Typen von Bildgebungsvorrichtungen angewendet werden soll;
- die Steuereinheit (203) geeignet ist, um die von der Eingabeeinheit eingegebene Anweisung zu empfangen, die alternativen Informationen zu extrahieren und die alternativen Informationen über die Chipschnittstelleneinheit (205) an den Chip (101) nach einem der vorstehenden Ansprüche zu senden;
- die Stromversorgungseinheit (204) geeignet ist, um Strom für die Informationseingabeeinrichtung bereitzustellen;
- die Chipschnittstelleneinheit (205) geeignet ist, um eine Kommunikationsschnittstelle zur Kommunikation zwischen der Informationseingabeeinrichtung (102) und dem Chip (101) bereitzustellen.

3. Informationseingabeeinrichtung nach Anspruch 2, **dadurch gekennzeichnet, dass** sie weiter geeignet ist, ein Kommunikationsprotokoll, das vom Chip (101) unterstützt wird, zu bestimmen durch:
- Bestimmen eines Kontaktstrukturtyps des Chips gemäß einem Widerstand eines Resistors, mit dem eine Verbindungseinrichtung ausgerüstet ist, wobei die Verbindungseinrichtung dazu dient, einen Übertragungskanal zur Kommunikation zwischen der Informationseingabeeinrichtung (102) und dem Chip (101) bereitzustellen,
- Bestimmen eines oder mehrerer Kommunikationsprotokolle, die von Chips unterstützt werden, die den spezifischen Kontaktstrukturtyp aufweisen, und
- Kommunizieren über das eine oder die mehreren Kommunikationsprotokolle mit dem Chip (101), wobei, wenn der Chip korrekt antwortet, ein Kommunikationsprotokoll in Verwendung das von dem Chip unterstützte Kommunikationsprotokoll ist.

4. Informationseingabeeinrichtung nach Anspruch 2, **dadurch gekennzeichnet, dass** sie weiter eine externe Speichereinheit umfasst, geeignet, um die alternativen Informationen zu speichern.

5. Informationseingabeeinrichtung nach Anspruch 2, **dadurch gekennzeichnet, dass** sie weiter eine Ausgabeeinrichtungs-Schnittstelleneinheit umfasst, geeignet, um eine Kommunikationsschnittstelle zur Kommunikation zwischen einer Ausgabeeinrichtung, die Daten an die Informationseingabeeinrichtung ausgibt, und der Informationseingabeeinrichtung bereitzustellen.

6. Informationseingabeeinrichtung nach Anspruch 2, **dadurch gekennzeichnet, dass** die Steuereinheit (203) weiter geeignet ist, die Informationseingabeeinrichtung (102) zu steuern, um zu erkennen, ob der Chip (101) funktionsfähig ist.

7. Informationseingabeeinrichtung nach Anspruch 2, **dadurch gekennzeichnet, dass** sie weiter eine Warneinheit umfasst, geeignet, um eine Warnmeldung zu veranlassen, wenn die Informationseingabeeinrichtung (102) erkennt, dass der Chip (101) nicht funktionsfähig ist.

8. Zugehöriges System einer Bildgebungskassette, umfassend einen Chip (101) und eine Informationseingabeeinrichtung (102), wobei das System **dadurch gekennzeichnet ist, dass**;
- der Chip ein Chip (101) nach Anspruch 1 ist, geeignet, um universelle Informationen und alternative Informationen zu speichern, die von der Informationseingabeeinrichtung (102) gesendet wurden, wobei die universellen Informationen während des Herstellungsprozesses geschrieben werden, und die alternativen Informationen nach dem Herstellungsprozess geschrieben werden, wenn der Chip einem spezifischen Benutzer bereitgestellt wird; und
- die Informationseingabeeinrichtung eine Informationseingabeeinrichtung (102) nach einem der Ansprüche 2 bis 7 ist, geeignet, um die alternativen Informationen zu speichern und an den Chip (101) zu senden

9. Zugehöriges System einer Bildgebungskassette nach Anspruch 8, weiter umfassend eine Verbindungseinrichtung, geeignet, um einen Übertragungskanal zur Kommunikation zwischen der Informationseingabeeinrichtung (102) und dem Chip (101) bereitzustellen.

10. Zugehöriges System einer Bildgebungskassette nach Anspruch 8, wobei die Informationseingabeeinrichtung (102) und der Chip (101) auf eine drahtlose Weise kommunizieren.

11. Zugehöriges System einer Bildgebungskassette nach einem der Ansprüche 8 bis 9, wobei die Informationseingabeeinrichtung (102) weiter geeignet ist, den Chip (101) gemäß einem Kommunikationsprotokoll zwischen der Informationseingabeeinrichtung und dem Chip aufzurüsten.

12. Informationseingabeverfahren für einen Chip (101) nach Anspruch 1, wobei das Verfahren die folgenden Schritte umfasst:
- Speichern von universellen Informationen (301) in den Chip (101), wobei die universellen Informationen während des Herstellungsprozesses geschrieben werden;
- nach dem Speicher der universellen Informationen, Speichern von alternativen Informationen (302) in den Chip (101), indem eine Chipschnittstelleneinheit (205) zwischen dem Chip und einer Informationseingabeeinrichtung (102) verwendet wird, wobei die alternativen Informationen nach dem Herstellungsprozess geschrieben werden, wenn der Chip einem spezifischen Benutzer bereitgestellt wird, wobei
die universellen Informationen umfassen: einen gemeinsamen Teil von Kommunikationsprotokollen zwischen dem Chip und unterschiedlichen Typen von Bildgebungsvorrichtungen; die alternativen Informationen umfassen: einen Unterschiedsteil der Kommunikationsprotokolle zwischen dem Chip und unterschiedlichen Typen von Bildgebungsvorrichtungen, und Chipdaten für den Chip, der auf unterschiedliche Typen von Bildgebungsvorrichtungen angewendet werden soll; oder
die universellen Informationen umfassen: einen gemeinsamen Teil von Kommunikationsprotokollen zwischen dem Chip und unterschiedlichen Typen von Bildgebungsvorrichtungen, und einen gemeinsamen Teil von Chipdaten für den Chip, der auf unterschiedliche Typen von Bildgebungsvorrichtungen angewendet werden soll; die alternativen Informationen umfassen: einen Unterschiedsteil der Kommunikationsprotokolle zwischen dem Chip und unterschiedlichen Typen von Bildgebungsvorrichtungen, und einen Unterschiedsteil von Chipdaten für den Chip, der auf unterschiedliche Typen von Bildgebungsvorrichtungen angewendet werden soll; oder
die universellen Informationen umfassen: ein universelles Kommunikationsprotokoll zwischen dem Chip und unterschiedlichen Typen von Bildgebungsvorrichtungen; die alternativen Informationen umfassen: Chipdaten für den Chip, der auf unterschiedliche Typen von Bildgebungsvorrichtungen angewendet werden soll; oder
die universellen Informationen umfassen: ein universelles Kommunikationsprotokoll zwischen dem Chip und unterschiedlichen Typen von Bildgebungsvorrichtungen, und einen Gemeinschaftsteil von Chipdaten für den Chip, der auf unterschiedliche Typen von Bildgebungsvorrichtungen angewendet werden soll; die alternativen Informationen umfassen: einen Unterschiedsteil von Chipdaten für den Chip, der auf unterschiedliche Typen von Bildgebungsvorrichtungen angewendet werden soll.

## Revendications

1. Puce (101) comprenant :
- une unité de stockage (21) conçue pour stocker des informations universelles et des informations alternatives, dans laquelle les informations universelles sont écrites pendant un processus de fabrication et les informations alternatives sont écrites lorsque la puce est fournie à un utilisateur spécifique après le processus de fabrication ;
- une unité d'interface de communication (22) conçue pour fournir une interface de communication pour une communication entre un dispositif externe et la puce (101) ;
- une unité de commande de puce (23) conçue pour commander une communication entre la puce (101) et le dispositif externe ;
**caractérisée en ce que** lesdites informations alternatives sont envoyées par un appareil d'entrée d'informations (102) selon un type d'un dispositif d'imagerie (201) qui doit être utilisé avec la puce (101) ; dans laquelle
l'unité d'interface de communication (22) comprend :
une unité d'interface d'appareil d'entrée (221), conçue pour fournir une interface de communication pour une communication entre la puce (101) et l'appareil d'entrée d'informations (102) ; et
une unité d'interface de dispositif d'imagerie (222), conçue pour fournir une interface de communication pour une communication entre la puce (101) et le dispositif d'imagerie, et en outre conçue pour fournir une interface de communication pour l'appareil d'entrée d'informations (102) pour détecter si la puce (101) est fonctionnelle ;
l'unité d'interface d'appareil d'entrée (221) et l'unité d'interface de dispositif d'imagerie (222) sont la même unité d'interface ; et
- les informations universelles comprennent : une partie commune de protocoles de communication entre la puce et différents types de dispositifs d'imagerie ; les informations alternatives comprennent : une partie de différence des protocoles de communication entre la puce et différents types de dispositifs d'imagerie, et des données de puce pour la puce à appliquer à différents types de dispositifs d'imagerie ; ou
- les informations universelles comprennent : une partie commune de protocoles de communication entre la puce et différents types de dispositifs d'imagerie, et une partie commune de données de puce pour la puce à appliquer à différents types de dispositifs d'imagerie ; les informations alternatives comprennent : une partie de différence des protocoles de communication entre la puce et différents types de dispositifs d'imagerie, et une partie de différence de données de puce pour la puce à appliquer à différents types de dispositifs d'imagerie ; ou
- les informations universelles comprennent : un protocole de communication universel entre la puce et différents types de dispositifs d'imagerie ; les informations alternatives comprennent : des données de puce pour la puce à appliquer à différents types de dispositifs d'imagerie ; ou
les informations universelles comprennent : un protocole de communication universel entre la puce et différents types de dispositifs d'imagerie, et une partie commune de données de puce pour la puce à appliquer à différents types de dispositifs d'imagerie ; les informations alternatives comprennent : une partie de différence de données de puce pour la puce à appliquer à différents types de dispositifs d'imagerie.

2. Appareil d'entrée d'informations (102) comprenant une unité d'affichage (201), une unité d'entrée (202), une unité de commande (203), une unité d'alimentation (204) et une unité d'interface de puce (205) ;
dans lequel :
- l'unité d'affichage (201) est conçue pour afficher un état de travail de l'appareil d'entrée d'informations (102) et une invite d'informations ;
- l'unité d'entrée (202) est conçue pour entrer dans l'unité de commande (203) une instruction fournissant des informations alternatives selon un type d'un dispositif d'imagerie qui doit être utilisé avec une puce (101) selon la revendication 1, les informations alternatives sont écrites lorsque la puce est fournie à un utilisateur spécifique après le processus de fabrication, dans lequel les informations alternatives comprennent :
- une partie de différence des protocoles de communication entre la puce et différents types de dispositifs d'imagerie, et des données de puce pour la puce à appliquer à différents types de dispositifs d'imagerie ; ou
- une partie de différence des protocoles de communication entre la puce et différents types de dispositifs d'imagerie, et une partie de différence de données de puce pour la puce à appliquer à différents types de dispositifs d'imagerie ; ou
- des données de puce pour la puce à appliquer à différents types de dispositifs d'imagerie ; ou
- une partie de différence de données de puce pour la puce à appliquer à différents types de dispositifs d'imagerie ;
- l'unité de commande (203) est conçue pour recevoir l'instruction entrée par l'unité d'entrée, pour extraire les informations alternatives et pour envoyer les informations alternatives à ladite puce (101) selon l'une quelconque des revendications précédentes par le biais de l'unité d'interface de puce (205) ;
- l'unité d'alimentation (204) est conçue pour fournir de la puissance pour l'appareil d'entrée d'informations ;
- l'unité d'interface de puce (205) est conçue pour fournir une interface de communication pour une communication entre l'appareil d'entrée d'informations (102) et la puce (101).

3. Appareil d'entrée d'informations selon la revendication 2, **caractérisé en ce qu'**il est en outre conçu pour déterminer un protocole de communication pris en charge par la puce (101) :
- en déterminant un type de structure de contact de la puce selon une résistance d'une résistance installée dans un appareil de connexion, l'appareil de connexion étant destiné à fournir un canal de transmission pour une communication entre l'appareil d'entrée d'informations (102) et la puce (101),
- en déterminant un ou plusieurs protocoles de communication pris en charge par des puces ayant le type de structure de contact déterminé, et
- en communiquant avec la puce (101) par le biais des un ou plusieurs protocoles de communication, dans lequel, si la puce répond correctement, un protocole de communication, lors de l'utilisation, est le protocole de communication pris en charge par la puce.

4. Appareil d'entrée d'informations selon la revendication 2, **caractérisé en ce qu'**il comprend en outre une unité de stockage externe conçue pour stocker lesdites informations alternatives.

5. Appareil d'entrée d'informations selon la revendication 2, **caractérisé en ce qu'**il comprend en outre une unité d'interface d'appareil de sortie, conçue pour fournir une interface de communication pour une communication entre un appareil de sortie qui transmet des données à l'appareil d'entrée d'informations et l'appareil d'entrée d'informations.

6. Appareil d'entrée d'informations selon la revendication 2, **caractérisé en ce que** l'unité de commande (203) est en outre conçue pour commander l'appareil d'entrée d'informations (102) pour détecter si la puce (101) est fonctionnelle.

7. Appareil d'entrée d'informations selon la revendication 2, **caractérisé en ce qu'**il comprend en outre une unité d'alerte conçue pour inviter une indication d'alerte si l'appareil d'entrée d'informations (102) détecte que la puce (101) n'est pas fonctionnelle.

8. Système associé d'une cartouche d'imagerie, comprenant une puce (101) et un appareil d'entrée d'informations (102), ledit système étant **caractérisé en ce que** :
- la puce est une puce (101) selon la revendication 1, conçue pour stocker des informations universelles et des informations alternatives envoyées par l'appareil d'entrée d'informations (102), dans lequel les informations universelles sont écrites pendant un processus de fabrication et les informations alternatives sont écrites lorsque la puce est fournie à un utilisateur spécifique après le processus de fabrication ; et
- l'appareil d'entrée d'informations est un appareil d'entrée d'informations (102) selon l'une quelconque des revendications 2 à 7, conçu pour stocker et envoyer à la puce (101) les informations alternatives.

9. Système associé d'une cartouche d'imagerie selon la revendication 8, comprenant en outre un appareil de connexion, conçu pour fournir un canal de transmission pour une communication entre l'appareil d'entrée d'informations (102) et la puce (101).

10. Système associé d'une cartouche d'imagerie selon la revendication 8, dans lequel l'appareil d'entrée d'informations (102) et la puce (101) communiquent de manière non filaire.

11. Système associé d'une cartouche d'imagerie selon l'une quelconque des revendications 8 à 9, dans lequel l'appareil d'entrée d'informations (102) est en outre conçu pour améliorer la puce (101) selon un protocole de communication entre un appareil d'entrée d'informations et la puce.

12. Procédé d'entrée d'informations pour une puce (101) selon la revendication 1, ledit procédé comprenant les étapes suivantes consistant :
- à stocker des informations universelles (301) dans la puce (101), dans lequel les informations universelles sont écrites pendant un processus de fabrication ;
- à stocker des informations alternatives (302) dans la puce (101) après le stockage des informations universelles en utilisant une unité d'interface de puce (205) entre la puce et un appareil d'entrée d'informations (102), les informations alternatives sont écrites lorsque la puce est fournie à un utilisateur spécifique après le processus de fabrication, dans lequel
les informations universelles comprennent : une partie commune de protocoles de communication entre la puce et différents types de dispositifs d'imagerie ; les informations alternatives comprennent : une partie de différence des protocoles de communication entre la puce et différents types de dispositifs d'imagerie, et des données de puce pour la puce à appliquer à différents types de dispositifs d'imagerie ; ou
les informations universelles comprennent : une partie commune de protocoles de communication entre la puce et différents types de dispositifs d'imagerie, et une partie commune de données de puce pour la puce à appliquer à différents types de dispositifs d'imagerie ; les informations alternatives comprennent : une partie de différence des protocoles de communication entre la puce et différents types de dispositifs d'imagerie, et une partie de différence de données de puce pour la puce à appliquer à différents types de dispositifs d'imagerie ; ou
les informations universelles comprennent : un protocole de communication universel entre la puce et différents types de dispositifs d'imagerie ; les informations alternatives comprennent : des données de puce pour la puce à appliquer à différents types de dispositifs d'imagerie ; ou
les informations universelles comprennent : un protocole de communication universel entre la puce et différents types de dispositifs d'imagerie, et une partie commune de données de puce pour la puce à appliquer à différents types de dispositifs d'imagerie ; les informations alternatives comprennent : une partie de différence de données de puce pour la puce à appliquer à différents types de dispositifs d'imagerie.
